# EUROPEAN PATENT SPECIFICATION

(11) **EP 0 430 290 B1**
(45) Date of publication and mention of the grant of the patent: **06.09.1995**
(21) Application number: 90122997.1
(22) Date of filing: 30.11.1990
(51) Int. Cl.: C09D 5/44, C09D 17/00

(54) **Process for producing aqueous pigment pastes and pigment pastes produced thereby**
Verfahren zur Herstellung von wässerigen Pigmentpasten und so erhaltene Pigmentpasten
Procédé de préparation de pâtes pigmentaires aqueuses et pâtes pigmentaires ainsi préparées

(30) Priority: 01.12.1989 US 444596
(43) Date of publication of application: 05.06.1991
(73) Proprietor: BASF Corporation, Wyandotte, Michigan 48192-3736 (US)
(72) Inventor: Cibura, Klaus, W-4400 Münster-Hiltrup (DE); Kemp, Kathleen M., Livonia Michigan 48154 (US); Obrzut, Michel L., Ann Arbor Michigan 48103 (US)
(74) Representative: Baillie, Iain Cameron

(56) References cited:
- EP-A- 0 287 089
- EP-A- 0 322 150

## Description

This invention relates to chemical processes. More particularly, the present invention concerns a chemical process for preparing a substantially aqueous pigment paste for electrodeposition paint compositions from grind resins which are initially synthesized in solvent systems comprised primarily of volatile organic solvents.

In the coatings art, there has been an increasing emphasis upon lowering the volatile organic content of paints and similar coatings compositions. This concern stems both from the increasing costs of organic solvents as well as problems associated with the environmental impact of the use of such volatile organic solvents and the costs involved in ameliorating such environmental impact. To address these concerns, research efforts in the coatings art have recently been focused upon water-borne coating compositions which contain a minimal amount of volatile organic solvent component.

One such area in the coatings art where efforts to prepare water-borne coatings has received attention is the area of electrodeposited automotive coatings. It is the practice in automotive vehicle manufacturing to coat the steel vehicle body with a coating of electrodeposited paint which may be applied directly over the clean bare steel vehicle body or, more characteristically, over a steel vehicle body which has been previously treated by phosphatizing or similar process. The primary function of the electrodeposited coating layer is to impart corrosion resistance to the steel vehicle body. Subsequent coatings layers of primer/surfacer and decorative coatings are applied over the electrodeposited coating layer to produce the finished product.

Electrodeposition coating compositions generally comprise a principal binder resin; a pigment paste which is made up of a pigment grind resin and one or more pigmenting agents; one or more additives to improve flow and leveling, prevent "cratering," etc.; and solvent, primarily water. The principal resin is typically a quaternary amine type resin or an amine-functionalized resin in which the amine functionality has been converted to a salt by neutralization with an acid such as acetic or lactic acid. The total volatile organic content of the electrodeposition formulation derives from residual organic solvents carried with the principal resin, as well as volatile organic solvent contained in the pigment paste. While efforts to reduce the volatile organic content derived from the principal resin have been reasonably successful, efforts to reduce the contribution of volatile organics from the pigment paste have met with less success.

This problem has a number of root causes. In order to effectively grind pigmenting agents to produce a smooth, uniform pigment paste of suitably small pigment particle size, the pigment grind resin must have a reasonably low viscosity. Moreover, to avoid detriment to the corrosion resistance of the resulting electrodeposited coating layer, the pigment grind resin polymer should ideally contain a high percentage of so-called "hard" aromatic units. However, these highly aromatic pigment grind resin polymers tend to be soluble only in organic solvents. These contradicting factors require that, to maintain the high aromatic content of the grind resin polymer for the desired corrosion resistance and to produce a pigment paste having the necessary low viscosity, it is necessary to include a considerable amount of volatile organic component in the pigment paste. As a result, in the overall electrodeposition coating composition, the pigment paste may comprise only ten to twenty percent of the formulation; however, it can contribute between forty and fifty percent of the total volatile organic content of the formulation.

Various attempts have been made to lower the volatile organic content of pigment pastes. For example in United States Patents 4,711,917; 4,540,725; and 4,530,945, reductions in the volatile organic content of the pigment pastes are achieved by employing high pigment-to-binder ratios in the pastes, on the order of 25:1 to as high as >50:1. However, in some instances, such high loadings of pigment in pigment grind resins increase the viscosity of the paste to the point where grinding efficiency suffers. European Patent EP-A-0 287 089 deals with a process for preparing an aqueous binder system for cathodically deposition based on amino groups-containing epoxide resins acidified with lactic acid or acetic acid and mixed with a curing agent. During said process the organic solvent used in synthesizing the vehicle system is removed by azeotropic distillation.

Another attempted solution involves the incorporation of water-miscible segments in the backbone of the pigment grind resin during its synthesis. For example, increased water miscibility of pigment grind resins may be achieved by replacing "hard" aromatic segments in the grind resin polymer backbone with "soft" segments comprising polyalkylene or poly(oxyalkylene) chains. The resulting grind resin polymers are more miscible with water, permitting a reduction in the amount of volatile organic component required for dispersion of the pigment grind resin. However, as discussed above, the corrosion resistance of electrodeposited films degrades with increasing "soft" segment content of the resins which make up the electrodeposition composition.

Therefore, there is a need in the art for a method of producing pigment pastes, particularly for use in electrodeposition coatings, which comprise resins of high aromatic content while simultaneously minimizing volatile organic content.

### Summary of the Invention

The present invention meets this need by providing a process for forming a substantially aqueous pigment paste comprising the steps of first a) synthesizing an electrocoat pigment grind resin having a high degree of aromatic content in a non-aqueous solvent system comprising one or more components capable of forming an azeotrope with water; b) adding water to the mixture of the solvent system and pigment grind resin; c) azeotropically removing the non-aqueous components to form an aqueous dispersion of the pigment grind resin having less than 10 percent volatile organic content by weight based upon the weight of the pigment grind resin; d) forming a mixture of the aqueous dispersion of pigment grind resin with one or more pigments; and e) grinding the mixture of aqueous dispersion of pigment grind resin and pigments to form a uniform pigment paste.

### Detailed Description

The process of the present invention is useful for preparing substantially aqueous pigment pastes for electrocoat coating compositions. The process permits the conversion of electrodeposition pigment grind resins synthesized in organic solvent systems to dispersions in substantially aqueous solvent systems and the subsequent use of these aqueous based pigment grind resin dispersions for the preparation of electrocoat pigment pastes. The process is particularly adapted for the utilization of grind resin polymers which have a high degree of aromatic character. The presence of a high percentage of so-called "hard" aromatic segments in the resin polymer backbone of the pigment grind resin is desirable because of the resulting corrosion resistance which such grind resins impart to the finished electrocoat film.

The synthesis of resins of high aromatic content pigment grind resins is generally carried out by solution polymerization of the desired monomers in the presence of a suitable condensation catalyst such as triphenyl phosphine. In order to maintain a true solution throughout the synthesis, the reaction solvent system must be essentially non-aqueous, generally comprising one or more organic solvents such as aromatic hydrocarbon solvents such as toluene and xylene, alcohols, ether alcohols such as the so-called "cellosolves," esters, ketones and mixtures thereof.

An example of a pigment grind resins which can be utilized in the method of this invention is the reaction product of an aromatic diglycidyl ether, a bis-aryl alcohol or aromatic diol, a primary amine, and an alkyl or alkylaryl glycidyl ether. Aromatic diglydicyl ethers useful in the formulation of pigment grind resins for the process of this invention have the general formula 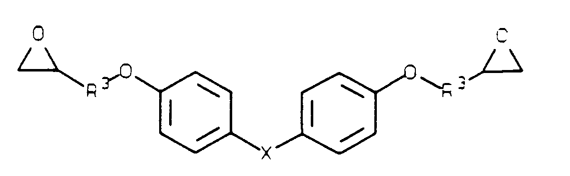
where X may be a direct covalent bond linking the two aromatic rings or, alternatively, may be oxygen, sulfur, a methylene group, a carbonyl group, a difluoromethylene group, or >CR¹R² where R¹ and R² may be the same or different and are straight or branched alkyl groups of from one to six carbon atoms, and R³ is alkylene of from one to eight carbon atoms.

The syntheses of the diglycidyl ether compounds follow procedures known in the art. In such fashion, epihalohydrins such as epichlorohydrin, epibromohydrin or epiiodohydrin are reacted with diol precursors to form the bis-glycidyl ether. Reaction conditions include use of an aprotic, polar solvent and an acid scavenger such as aqueous sodium hydroxide or other similar hydroxide base under about stoichiometric proportions and a temperature of from about 0°C to about 100°C, preferably about ambient temperature.

The bis-aryl alcohols or aromatic diols have the formula HO-Ar-OH, wherein Ar is selected from the group consisting of phenylene; phenylene substituted with halogen, alkoxy of about 1 to about 6 carbon atoms, or alkyl of 1 to 6 carbon atoms; naphthalene; polyphenylene having two or three phenylenes linked by carbon-carbon bonds or alkylene groups having about 1 to about 6 carbon atoms; and naphthalene or a polyphenylene as defined above substituted with halogen, or alkyl of about 1 to about 6 carbon atoms, or alkoxy of about 1 to about 6 carbon atoms. Preferably, the bis-aryl alcohol or aromatic diol comprises one or more of bisphenol A, hydroquinone and resorcinol.

The aromatic diglycidyl ethers and bis-aryl alcohol or aromatic diol are combined in any of several combinations to produce the backbone structure of the resins. The addition reaction oligomers formed from the combination of aromatic diglycidyl ether and bis-aryl alcohol or aromatic diol monomers contain alternating units of aromatic diglycidyl ethers and bis-aryl alcohols or aromatic diols. It is believed that during the reaction, the hydroxy groups of the bis-aryl alcohols or aromatic diols react with the epoxide groups of the aromatic diglycidyl ether monomeric unit so as to open the epoxide ring and form a secondary alcohol group within the aromatic diglycidyl ether monomeric unit and an ether linkage between the bis-aryl alcohol or aromatic diol and aromatic diglycidyl ether monomeric units.

The distribution of aromatic diglycidyl ether monomers and bis-aryl alcohol or aromatic diol monomers, when more than one of each is present, may be random or ordered. In producing a random distribution, the bis-aryl alcohol or aromatic diol and aromatic diglycidyl ether monomers are combined as a gross mixture at the beginning of the reaction. In producing an ordered distribution of aromatic diglycidyl ether and bis-aryl alcohol or aromatic diol monomer addition will be sequential so that a block of the first aromatic diglycidyl ether and a particular bis-aryl alcohol or aromatic diol will first be produced and then a second aromatic diglycidyl ether and bis-aryl alcohol will be added to form second blocks grafted to the first blocks.

It is preferred to use an excess of diglycidyl ether to bis-aryl alcohol or aromatic diol so that the reaction product will be terminated with epoxide groups. Preferably, the ratio of aromatic diglycidyl ether to bis-aryl alcohol or aromatic diol is from about 8:1 to about 1.2:1, and most preferably from about 2.5:1 to about 3:1.

The oligomeric molecular weight of the backbone structure may be from about 300 to about 3000. The ratio of the sum of aromatic diglycidyl ether monomer equivalents to the sum of bis-aryl alcohol or aromatic diol monomer equivalents used for the addition reaction to form the oligomers will be calculated so as to yield a molecular weight within this range. The equivalents of aromatic diglycidyl ether or bis-aryl alcohol or aromatic diol is calculated by dividing the molecular weight of aromatic diglycidyl ether, bis-aryl alcohol, or aromatic diol by the number of hydroxyl or epoxide groups present in the respective molecule. The range of equivalents of bis-aryl alcohol or aromatic diol to aromatic diglycidyl ether ratios appropriate for generation of this molecular weight range will be from 1:1.2 to about 1:8. The preferred molecular weights lie in the range of from about 300 to 3000 and especially preferred are molecular weights of about 680 to 720. The ratio of bis-aryl alcohol or aromatic diol to aromatic diglycidyl ether equivalents which produces these preferred molecular weights will be from about 1.2:1 to about 1:8.

Appropriate adjustment of the ratio of the reactants and reaction conditions will also affect the molecular weight and sequence of the aromatic diglycidyl ethers and bis-aryl alcohols present in the oligomers. Those skilled in the art will understand the variations and the effects they have upon the oligomeric character. Generally, the extent of addition will increase with both the time and temperature of the reaction so that the desired molecular weight will be achieved through use of periods of about 1 to 4 hours and temperatures of about 140°C to 170°C. However, the reaction usually is self-limiting so that further time or temperature adjustment will not increase the limiting molecular weight.

Lewis bases are generally used as catalysts to promote the addition of the bis-aryl alcohol or aromatic diol monomers to the aromatic diglycidyl ether monomers. It is preferred to use a triaromatic phosphine such as triphenyl phosphine as well as tetraalkyl phosphonium salts.

A large number of different primary amine functional capping agents can be added to the backbone structure of the present invention. More particularly, it is believed that the primary amines react with the epoxy end groups of the backbone structure so as to open the epoxide ring and form a secondary alcohol group with the backbone structure and a secondary amine. These primary amines may serve a number of different functions, including surface wetting, providing basicity, solubility, and lipophilicity. Another characteristic which the primary amine may provide is allowing the grind resin to be soluble in the bath to which it is to be added.

Suitable primary amines for increasing the solubility of the backbone structure are amino alcohols such as diethanolamine or aminopolyalkoxy alcohols such as Polyglycol Amine H-163, an ethoxylated species having the chemical formula H₂N-(CH₂)₃-(O-CH₂CH₂)₂-OH and commercially available from Union Carbide Corporation, or 2,2'-aminoethoxyethanol, available from BASF, AG, Ludwigshafen, FRG. Other suitable primary amines for adjusting the solubility of the backbone structure are hydroxyalkyl alkyl amines, dihydroxyalkylamines. In addition, aromatic and aliphatic can also be employed which optionally possess functional groups containing oxygen, sulfur, halogen or nitroso. Examples are monoethanol-amine, 4-aminobenzoic acid, aminopropionic acid, N-(hydroxyethyl)ethylene diamine, anthranilic acid, and p-aminophenol. Other suitable primary amines have aliphatic chains of from about 1 to about 24 carbon atoms. The aliphatic chains may be ethoxylated at one end. The chain length of the oligoether portion is not more than 7 units of ethylene oxide.

Suitable primary amines for increasing the basicity of the backbone structure include diamines such as dimethylaminopropylamine. Examples of other diamines which are suitable include ethylene diamine, 1,2-propylenediamine, 1,3-propylenediamine, 1,2-butylenediamine, 1,3-butylenediamine, 1,4-butylenediamine, 1,5-pentylenediamine, 1,6-hexylenediamine, and the like. Aromatic diamines such as the phenylene diamines and the toluene diamines can also be employed. Examples of these amines are p-phenylenediamine and p-toluenediamine. N-alkyl and N-aryl derivatives of the above amines can be employed such as N,N-dimethyl-o-phenylenediamine, N'N'-di-p-tolyl-m-phenylenediamine, and p-aminodiphenylamine.

Typically, the amount of primary amine used is proportional to or in excess of the stoichiometric equivalents of the epoxide present. Preferably, the ratio of primary amine to backbone structure is from about 0.6:1 to about 1.2:1, and most preferably from about 0.85:1 to about 1:1.

The primary amine also functions to allow the grind resin of the present invention to be adapted for use with any number of electrocoating systems. Thus, for example, the inclusion of a greater proportion of a basic amine such as dimethylaminopropylamine will provide a grind resin product with greater solubility in higher pH baths, and therefore greater compatibility with more basic primary emulsions (i.e., pH=6-8.5). Likewise, the inclusion of a greater proportion of an amino alcohol such as 9-amino-3,6-dioxanonan-1-ol will render the grind resin produced more soluble in acidic baths, and therefore more compatible with more acidic primary emulsions (i.e., pH=2-6).

Next, a monoepoxide is reacted with the now-secondary amine functional polymer. More particularly, it is believed that the secondary amine reacts with the epoxy end of the monoepoxide so as to open the epoxide ring, thereby converting the secondary amine to a tertiary amine and forming another secondary alcohol.

The monoepoxides which are useful in the present invention have the formula 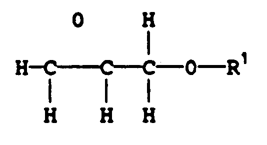
wherein R¹ is alkyl having from about 4 to about 24 carbon atoms or aryl substituted with a straight or branched chain of from about 4 to about 24 carbon atoms. The amount and type of monoepoxide used may be varied depending upon the final properties required. For instance, preferred monoepoxides include alkylaryl epoxides such as nonylphenolglycidyl ether and 2-ethylhexylglycidyl ether.

The monoepoxide serves to provide the grind resin of the present invention with a lipophilic tail. This is important because it enhances pigment wetting characteristics and also provides steric stabilization. In addition, the monoepoxide acts as a primary amine scavenger, reacting with remaining primary amine. These free primary amines are undesirable in an electrocoat system because they adversely affect bath conductivity, bath stability, plating characteristics, and corrosion performance.

The ratio of primary amine to monoepoxy moeties has an effect upon the total molecular weight of the grind resin which is produced, as well as upon the basicity and grinding characteristics of the grind resin produced. Typically, the amount of monoepoxide used is roughly equal to or less than the stoichiometric equivalents of the secondary amine present. When a monoepoxide is used, the ratio of the primary amine to monoepoxide is from about 1 to about 10 equivalents, preferably from about 1.4 to about 2 equivalents, of primary amine per equivalent of monoepoxide. Most preferably, the ratio of primary amine to monoepoxide is about 1.7 equivalents primary amine per equivalent of monoepoxide.

In another embodiment of the present invention, the primary amine can provide all or part of the lipophilicity of the backbone structure. In this embodiment, the primary amine comprises fatty nitrogen chemicals including amines, amides and amine acetates. Preferably, the primary amine comprises aliphatic fatty amines and their ethoxylated derivates, and have from about 7 to 24 carbon atoms. Examples of suitable fatty amines include Adogen cocoa amines. One preferred fatty amine is Adogen 160, which is commercially available from Sherex Chemical Co., Inc., P. O. Box 646, Dublin, OH.

The use of an effective amount of fatty amines in the present invention provides the backbone structure with sufficient lipophilicity such that only a small amount or no monoepoxide need be included. The fatty amine need not entirely replace the use of amino alcohols, diamines, and monoepoxides, and these ingredients may also be included in this embodiment of the invention to the extent desired.

In preparing the pigment grind resins of the present invention, the aromatic diglycidyl ether and the bis-aryl alcohol or aromatic diol are reacted at a temperature of about 100°C to about 180°C for a time sufficient to react all of the bis-aryl alcohol with the aromatic diglycidyl ether, generally about one hour to about two hours. The primary amine is reacted with the backbone structure thus formed at a temperature of about 50°C to about 120°C for a time sufficient to complete the epoxide-amine reaction, about one to about two hours. Finally, the monoepoxide is reacted with the secondary amine functional polymer thus formed at a temperature of about 70°C to about 100°C for a time sufficient to react all of the monoepoxide with the secondary amines found in the backbone structure, and any unreacted primary amines left in the solution, generally about one to about two hours.

It is an important feature of the process of the present invention that the solvent selected for synthesis of the pigment grind resin be chosen from those which are capable of forming an azeotrope or azeotropic mixture with water. (As used throughout this specification and the appended claims, the terms "azeotrope" and "azeotropic mixture" mean liquid mixtures of two or more substances which behave like a single substance in that the vapor produced by partial evaporation of the liquid has the same composition as the liquid. The constant boiling mixture exhibits either a maximum or a minimum boiling point as compared with other mixtures of the same substances.)

In addition, the solvent should preferably be free of reactive functional groups which prevent or compete with the desired resin synthesis reaction. For example, in the synthesis of grind resins which are the products of the reactions of epoxides with amines and alcohols, appropriate solvents for the reaction may comprise hydrocarbons, esters, ketones, ether alcohols and alcohols, provided the hydroxyl group-containing solvents are less reactive with the epoxide reagents than the alcohols which comprise the synthetic reagents. Moreover, the boiling point of the solvent is preferably above about 60°C to insure a feasible reaction rate for the formation of the resin.

Further, to provide a process which is feasible in terms of the time and energy costs involved in azeotropically removing the non-aqueous organic reaction solvent, it is preferable that the solvent chosen form an azeotrope with water which comprises a substantial fraction of the organic component. Preferably, the solvent should form an azeotropic mixture with water which comprises at least 50% by weight organic component.

Numerous azeotropic mixtures of organic solvents with water are known. For example, a very complete listing of azeotropes may be found in Horsley, Ind. Eng. Chem., Analytical Edition, 19: 508 (1947). A partial listing of binary azeotropes comprising water appears in Table 10-13, Lange's Handbook of Chemistry, J. A. Dean, Ed., 13th Edition, McGraw-Hill Book Co., New York, 1972, pp. 10-63 ff. The contents of both references are incorporated herein by reference.

Preferred solvents which form azeotropes with water and which possess the requisite properties for use in the process of the present invention are presented, together with the azeotropic composition and boiling point are presented in Table 1.

**Table 1**

| Binary Azeotropes with Water | | | |
|---|---|---|---|
| Organic Component | Percentage by Weight | | Boiling Point °C (760 mm Hg) |
| | Water | Organic | |
| **Alcohols** | | | |
| Ethanol | 4.5 | 95.5 | 78.1 |
| n-Propanol | 28.3 | 71.7 | 87.7 |
| iso-Propanol | 12.1 | 87.9 | 80.4 |
| n-Butanol | 38 | 62 | 92.4 |
| iso-Butanol | 33.2 | 66.8 | 90.0 |
| sec-Butanol | 32.1 | 67.9 | 88.5 |
| tert-Butanol | 11.7 | 88.3 | 79.9 |
| 2-Methyl-1-butanol | 49.6 | 50.4 | 95.2 |
| tert-Amyl alcohol | 27.5 | 72.5 | 87.4 |
| sec-Amyl alcohol | 36 | 64 | 91.7 |
| 2-Pentanol | 38.5 | 61.5 | 92.5 |

| **Hydrocarbons** | | | |
|---|---|---|---|
| Benzene | 8.9 | 91.1 | 69.3 |
| Toluene | 19.6 | 80.4 | 84.1 |

| **Ethers** | | | |
|---|---|---|---|
| Di-iso-propyl ether | 4.5 | 95.5 | 62.2 |
| Ethyl n-propyl ether | 4 | 96 | 59.5 |
| Di-iso-butyl ether | 23 | 77 | 88.6 |

| **Esters** | | | |
|---|---|---|---|
| n-Propyl formate | 3.6 | 96.4 | 71.9 |
| n-Butyl formate | 15 | 85 | 83.8 |
| iso-Butyl formate | 7.8 | 92.2 | 80.4 |
| n-Amyl formate | 28.4 | 71.6 | 91.6 |
| iso-Amyl formate | 23.5 | 76.5 | 89.7 |

### Example

### Preparation of Low Volatile Organic Content Acid-Salted Amine Type Pigment Paste

### Synthesis of the Polymer

The diglycidyl ether of bisphenol A (31.71 parts by weight) is dissolved in 1.64 parts by weight of xylene. This solution is charged to a clean dry reactor under a nitrogen atmosphere and heated to a temperature of 220°F (104.4°C) while stirring at a rate of about 150 rpm. Heating is discontinued and 6.62 parts by weight of bisphenol A are added to the reactor contents. When addition is complete, the mixture is heated to a temperature of 230°F (110°C) and held at that temperature until all of the bisphenol A has melted into the mixture.

Triphenylphosphine catalyst (0.02 parts by weight) is added to the reaction mixture and the temperature is slowly increased to 250°F (121.1°C) at which time a spontaneous exothermic reaction commences which peaks at about 300-320°F (148.9-160°C). The temperature of the reaction mixture is then maintained above about 300°F (148.9°C), allowing the reaction to continue until analysis of aliquot samples of the mixture indicates a weight per equivalent of epoxy (WPE) of about 350.

The reaction mixture is allowed to cool and 24.04 parts by weight of iso-butanol is added. The mixture is further cooled to about 120°F (48.9°C) and the stirring rate is increased to about 175 rpm. A mixture of 8.86 parts by weight of 9-amino-4,7-dioxo-nonanol and 4.64 parts by weight of dimethylaminopropylamine (DMAPA) are then added to the reactor contents over a period of about six minutes. The pump employed to charge the reactor vessel is then flushed with 2.74 parts by weight of iso-butanol and the flushing material is added to the reactor contents.

A spontaneous exothermic reaction ensues, and the reactor contents are held between about 220-230°F (104.4-110°C) for a period of about one hour. Analysis of aliquot samples of the reaction mixture indicates a MEQB (millequivalents of base per gram of measured non-volatiles) of 2.80 ±0.1.

Next, 16.99 parts by weight of nonylphenol glycidyl ether are added to the reactor vessel contents followed immediately by a pump flush of 2.74 parts by weight of iso-butanol. A spontaneous exothermic reaction follows, and the reactor contents are maintained between about 190-200°F (87.8°-93.3°C) for a period of about one hour. Analysis of aliquot samples of the reaction mixture indicates a MEQB value of 2.11 ± 0.1. (Total reaction product = 100 parts by weight.)

### Neutralization of the Polymer

Next, to 100 parts by weight of the polymer reaction mixture prepared as described above are added 12.94 parts by weight of 88% (by weight) lactic acid and 22.62 parts by weight of deionized water. (Total = 135.56 parts by weight.)

### Azeotropic Distillation of the Polymer Dispersion

The mixture is next heated to about 194°F (90°C) to begin distilling off an azeotropic mixture of water and volatile organics contained in the reaction mixture. After azeotropic distillation has proceeded such that approximatety 12.20 parts by weight of the distillate has been collected, distillation is continued while simultaneously adding a mixture of water and anti-foaming agent at a rate of about two parts for every one part of azeotropic distillate removed. The water/anti-foam agent mixture consists of 94.4% by weight deionized water and 5.6% by weight of Antifoam # 27 (mixture of inedible oils), avaliable from the Tri-Star Chemical Co., 9059 Longmont, Dallas, TX.

The addition of water/anti-foam agent and simultaneous distillation of water/organic azeotrope is continued until analysis of the distillation residue indicates a total organic solvent content (residual xylene and iso-butanol) of about 2-3%, based on the total weight of resin solids present in the mixture.

The mixture is then diluted with deionized water and sampled during the dilution to determine the viscosity. The viscosity is adjusted to between about 4000 and 6000 centipoises at 77°F (25°C), Brookfield, spindle # 4, 20 rpm). Analysis of the final resin dispersion indicates a volatile content of about 65.0%, of which less than 2% represents volatile organic components with the balance comprising water.

### Preparation of Pigment Paste

The polymer prepared as described above (41.72 parts by weight) is added, with stirring, 1.26 parts by weight of carbon black, 2.10 parts by weight of dibutyl tin oxide, 1.47 parts by weight of lead silicate, 6.3 parts by weight of anhydrous aluminum silicate, 32.97 parts by weight of titanium dioxide, and 14.18 parts by weight of deionized water (100 parts by weight total). The resulting mixture is passed through a vertical sand mill until a fineness of grind of 12 µm is obtained.

## Claims

1. A process for forming a substantially aqueous electrocoat pigment paste comprising the steps of:
a) synthesizing an electrocoat pigment grind resin in a non-aqueous solvent system comprising one or more components capable of forming an azeotrope with water, said synthesis comprising reacting together
i) an aromatic diglycidyl ether having the formula 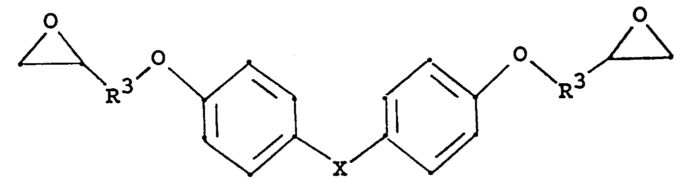 wherein X is a direct bond or is selected from
>O,
>S,
>CH₂,
>CF₂,
>C=O, and
>CR¹R² wherein R¹ and R² are the same or different and are straight or branched alkyl of from one to six carbon atoms, and
R³ is alkylene of from one to eight carbon atoms;
ii) a bis-aryl alcohol or aromatic diol;
neutralizing the product by reaction with a primary amine; and thereafter reacting the product obtained with a monoepoxide having the formula 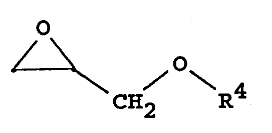 wherein R⁴ is selected from
straight or branched alkyl of from four to twenty-four carbon atoms, and
aryl substituted with straight or branched alkyl of from four to twenty-four carbon atoms;
b) adding water to the mixture of said solvent system and pigment grind resin;
c) azeotropically removing said non-aqueous components to form an aqueous dispersion of said pigment grind resin having less than 10 percent volatile organic content by weight based upon the weight of said pigment grind resin;
d) forming a mixture of said aqueous dispersion of said pigment grind resin with one or more pigments; and
e) grinding said mixture of said aqueous dispersion of pigment grind resin and pigments to form a uniform pigment paste.

2. A process as defined by claim 1, wherein said non-aqueous solvent system comprising one or more components capable of forming an azeotrope with water comprises a solvent which forms an azeotrope with water having at least 50% by weight organic content.

3. A process as defined by claim 1, wherein said non-aqueous solvent system comprising one or more components capable of forming an azeotrope with water comprises a solvent having a boiling point greater than about 60°C.

4. A process as defined by claim 1, wherein said non-aqueous solvent system comprising one or more components capable of forming an azeotrope with water comprises a solvent selected from the group consisting of ethanol, n-propanol, iso-propanol, n-butanol, iso-butanol, sec-butanol, tert-butanol, 2-methyl-1-butanol, tert-amyl alcohol, sec-amyl alcohol, 2-pentanol, benzene, toluene, di-iso-propyl ether, ethyl n-propyl ether, di-iso-butyl ether, n-propyl formate, n-butyl formate, iso-butyl formate, n-amyl formate, and iso-amyl formate.

5. A process as defined by any one of the preceding claims, wherein said pigment grind resin comprises an amine group-containing, epoxy group-containing acid salt solubilized resin.

6. A process as defined by any one of the preceding claims, further comprising the step of adding aqueous acid to said pigment grind resin following step a) to neutralize at least a portion of said amine groups.

7. A process in accordance with any one of the preceding claims, wherein said primary amine is selected from the group consisting of one or more of a diamine, an amino alcohol, and aminopolyoxy alcohol, and a fatty amine.

8. An electrocoating process wherein there is employed an electrocoat pigment paste obtained by the process of any one of the preceding claims.

## Patentansprüche

1. Verfahren zum Erzeugen einer im wesentlichen wässrigen Pigmentharzpaste für Elektrotauchlackierung, umfassend die Schritte:
(a) in einem nichtwässrigen Lösemittelsystem die Synthese eines Pigmentpastenharzes zum Elektrotauchlackieren, umfassend eine oder zwei Komponenten, die mit Wasser ein Azeotrop bilden können, welche Synthese umfaßt das Miteinander-zur-Reaktionbringen von:
(i) aromatischem Diglycidylether der Formel: 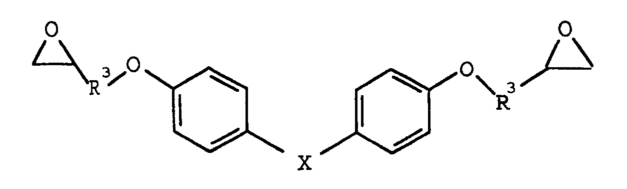 worin sind:
X eine direkt Bindung oder ausgewählt aus:
>O
>S
>CH₂
>CF₂
>C=O und
>CR¹R², worin R¹ und R² gleich oder verschieden und geradkettiges oder verzweigtes Alkyl mit 1...6 Kohlenstoffatomen sind, und
R³ Alkylen mit 1...8 Kohlenstoffatomen;
sowie
(ii) einem Bis-Arylalkohol oder aromatischem Diol; Neutralisieren des Produkts durch Reaktion mit einem primären Amin, und danach Umsetzen des erhaltenen Produkts mit einem Monoepoxid der Formel: 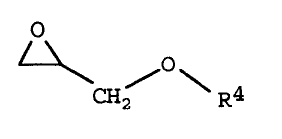 worin R⁴ ausgewählt aus:
geradkettigem oder verzweigtem Alkyl mit 4...24 Kohlenstoffatomen, und
Aryl, substituiert mit geradkettigem oder verzweigtem Alkyl mit 4...24 Kohlenstoffatomen;
(b) Zusetzen von Wasser zur Mischung aus Lösemittelsystem und Pigmentpastenharz;
(c) azeotropes Entfernen der nichtwässrigen Komponenten unter Bildung einer wässrigen Dispersion des Pigmentpastenharzes mit weniger als 10 Gewichtsprozent flüchtigen organischen Bestandteilen bezogen auf die Masse des Pigmentpastenharzes;
(d) Erzeugen einer Mischung der wässrigen Dispersion des Pigmentpastenharzes mit einem oder mehreren Pigmenten; und
(e) Anreiben der Mischung der wässrigen Dispersion des Pigmentpastenharzes und Pigmente, um eine gleichförmige Pigmentpaste zu bilden.

2. Verfahren nach Anspruch 1, bei welchem das nichtwässrige Lösemittelsystem mit einer oder mehreren Komponenten, die mit Wasser ein Azeotrop bilden können, ein Lösemittel umfaßt, welches ein Azeotrop mit Wasser bildet, das mindestens 50 Gewichtsprozent organische Bestandteile aufweist.

3. Verfahren nach Anspruch 1, bei welchem das nichtwässrige Lösemittelsystem mit einer oder mehreren Komponenten, die mit Wasser ein Azeotrop bilden können, ein Lösemittel umfaßt, welches einen Siedepunkt oberhalb von etwa 60 °C hat.

4. Verfahren nach Anspruch 1, bei welchem das nichtwässrige Lösemittelsystem mit einer oder mehreren Komponenten, die mit Wasser ein Azeotrop bilden können, ein Lösemittel umfaßt, welches ausgewählt wird aus der Gruppe, bestehend aus: Ethanol, n-Propanol, Isopropanol, n-Butanol, Isobutanol, *sec*-Butanol, *tert*-Butanol, 2-Methyl-1-butanol, *tert-* Amylalkohol, *sec*-Amylalkohol, 2-Pentanol, Benzol, Toluol, Diisopropylether, Ethyl-n-propylether, Diisobutylether, n-Propylformiat, n-Butylformiat, Isobutylformiat, n-Amylformiat, Isoamylformiat.

5. Verfahren nach einem der vorgenannten Ansprüche, bei welchem das Pigmentpastenharz ein mit Amin-Gruppe enthaltendem, Epoxy-Gruppe enthaltendem sauren Salz solubilisiertes Harz aufweist.

6. Verfahren nach einem der vorgenannten Ansprüche, ferner umfassend den Schritt des Zusetzens von wässriger Säure zu dem Pigmentpastenharz nach Schritt (a), um mindestens einen Teil der Amin-Gruppen zu neutralisieren.

7. Verfahren nach einem der vorgenannten Ansprüche, bei welchem das primäre Amin ausgewählt wird aus der Gruppe, bestehend aus einem Diamin, einem Aminoalkohol und Aminopolyoxyalkohol und einer Fettsäure, oder mehreren davon.

8. Verfahren zum Elektrotauchlackieren, bei welchem eine nach dem Verfahren nach einem der vorgenannten Ansprüche erhaltene Pigmentharzpaste zum Elektrotauchlackieren eingesetzt wird.

## Revendications

1. Procédé pour former une pâte pigmentaire essentiellement aqueuse pour revêtement par électrophorèse, qui comprend les étapes consistant :
a) à synthétiser une résine pigmentaire broyée pour revêtement par électrophorèse dans un système solvant non aqueux comprenant un ou plusieurs constituants à même de former un azéotrope avec l'eau, cette synthèse consistant à faire réagir l'un avec l'autre
i) un éther diglycidylique aromatique de formule 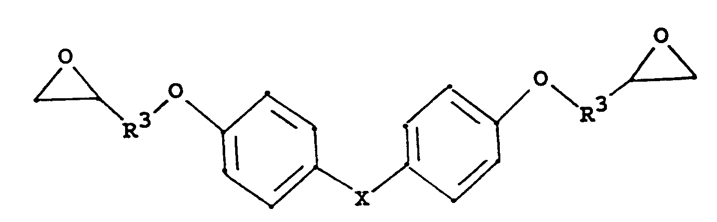 dans laquelle X est une liaison directe ou est choisi parmi >O, >S, >CH₂, >CF₂, >C=O et >CR¹R² où R¹ et R² sont identiques ou différents et représentent chacun un radical alkyle à chaîne droite ou ramifiée ayant de 1 à 6 atomes de carbone ; et
R³ est un radical alkylène ayant de 1 à 8 atomes de carbone ;
ii) un alcool bisarylique ou un diol aromatique ;
à neutraliser le produit par réaction avec une amine primaire ; puis à faire réagir le produit ainsi obtenu avec un monoépoxyde ayant la formule suivante : 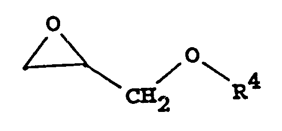 dans laquelle R⁴ est choisi parmi les radicaux alkyle à chaîne droite ou ramifiée ayant de 4 à 24 atomes de carbone et les radicaux aryle substitué par des substituants alkyle à chaîne droite ou ramifiée ayant de 4 à 24 atomes de carbone ;
b) à ajouter de l'eau au mélange dudit système solvant et de la résine pigmentaire broyée ;
c) à éliminer par un processus azéotrope lesdits constituants non aqueux pour former une dispersion aqueuse de la résine pigmentaire broyée, ayant une teneur en substances organiques volatiles inférieure à 10 % en poids par rapport au poids de ladite résine pigmentaire broyée ;
d) à former un mélange de ladite dispersion aqueuse de ladite résine pigmentaire broyée et d'un ou plusieurs pigments ; et
e) à broyer, pour former une pâte pigmentaire uniforme, ledit mélange de ladite dispersion aqueuse d'une résine pigmentaire broyée et des pigments.

2. Procédé selon la revendication 1, dans lequel ledit système solvant non aqueux, comprenant un ou plusieurs constituants à même de former un azéotrope avec l'eau, comprend un solvant qui forme avec l'eau un azéotrope ayant une teneur en substances organiques d'au moins 50 % en poids.

3. Procédé selon la revendication 1, dans lequel ledit système solvant non aqueux, comprenant un ou plusieurs constituants à même de former un azéotrope avec l'eau, comprend un solvant ayant un point d'ébullition supérieur à environ 60°C.

4. Procédé selon la revendication 1, dans lequel ledit système solvant non aqueux comprenant un ou plusieurs constituants à même de former un azéotrope avec l'eau comprend un solvant choisi parmi l'ensemble comprenant l'éthanol, le n-propanol, l'isopropanol, le n-butanol, l'isobutanol, le sec-butanol, le tert-butanol, le 2-méthyl-1-butanol, l'alcool tert-amylique, l'alcool sec-amylique, le 2-pentanol, le benzène, le toluène, l'oxyde de diisopropyle, l'oxyde d'éthyle et de n-propyle, l'oxyde de diisobutyle, le formiate de n-propyle, le formiate de n-butyle, le formiate d'isobutyle, le formiate de n-amyle et le formiate d'isoamyle.

5. Procédé selon l'une quelconque des revendications précédentes, dans lequel ladite résine pigmentaire broyée comprend une résine solubilisée d'un sel acide, contenant des groupes époxy et contenant des groupes amine.

6. Procédé selon l'une quelconque des revendications précédentes, qui comprend en outre l'étape consistant à ajouter l'acide en solution aqueuse à ladite résine pigmentaire broyée après l'étape a) pour neutraliser au moins une partie desdits groupes amine.

7. Procédé selon l'une quelconque des revendications précédentes, dans lequel ladite amine primaire est choisie parmi l'ensemble comprenant un ou plusieurs des composés suivants : une diamine, un amino-alcool, un amino-polyoxyalcool et une amine grasse.

8. Procédé de revêtement par électrophorèse, dans lequel on utilise une pâte pigmentaire pour revêtement par électrophorèse obtenue par le procédé selon l'une quelconque des revendications précédentes.
